# EUROPÄISCHE PATENTANMELDUNG

(11) **EP 2 527 170 A1**
(43) Veröffentlichungstag der Anmeldung: **28.11.2012**
(21) Anmeldenummer: 12168916.0
(22) Anmeldetag: 22.05.2012
(51) Int. Cl.: B60D 1/46, B60D 1/24

(54) **Höhenverstellbare Anhängerkupplung insbesondere für Nutzfahrzeuge**

(30) Priorität: 26.05.2011 EP 11004326
(71) Anmelder: Rheinmetall MAN Military Vehicles GmbH, 1230 Wien (AT)
(72) Erfinder: Theil, Norbert, 1080 Wien (AT)
(74) Vertreter: Dietrich, Barbara

(57) **Zusammenfassung**

Vorgeschlagen wird eine Vorrichtung (1), die sehr einfach aufgebaut ist und aus einer vorzugsweise vorderseitigen Kupplungsplatte (3) und einer vorzugsweise hinterseitigen und bevorzugt mittig eingebundenen höhenverstellenden Einrichtung (4) besteht, beispielweise einer Spindel. An der Kupplungsplatte (3) ist eine Anhängerkupplung (2) angebracht, die ihrerseits durch das Höhenverstellen der Kupplungsplatte (3) in der Höhe verstellt werden kann. Die Kupplungsplatte (3) selbst wird in / über eine Führung (6) bzw. beidseitigen Führungsrahmen (7, 8) gehalten / geführt. Das Verstellen der Kupplungsplatte (3) und damit der daran befestigten Anhängerkupplung (2) erfolgt über den Spindelantrieb (4).

## Beschreibung

Die Erfindung beschäftigt sich mit einer Höhenverstellbarkeit einer Anhängerkupplung insbesondere von bzw. für Nutzfahrzeuge(n). Dazu umfasst die Vorrichtung im Wesentlichen eine vorderseitig angebrachte Kupplungsplatte mit Anhängerkupplung und eine hinterseitig, bevorzugt mittig eingebundene, die Kupplungsplatte in der Höhe verstellbare Einrichtung. Die höhenverstellbare Vorrichtung kann an derartigen Fahrzeugen installiert und ohne größeren Aufwand auch nachgerüstet werden. Sie zeichnet sich dadurch aus, dass sie in eine sogenannte eingefahrene Position hochgefahren werden kann und dadurch der Überhangwinkel nicht beeinträchtigt wird, insbesondere dann, wenn kein Anhänger gezogen werden muss. Das erhöht die Mobilität und Geländegängigkeit des Fahrzeuges. Für den Gebrauch wird die Vorrichtung mit Anhängerkupplung ausgefahren und kann auf diverse Deichsel- oder Anhängerhöhen eingestellt werden.

Die DE 20 2010 003 686 U1 beschreibt eine Anhängerkupplung mit einem hakenförmig gekrümmten Kugelhals, dessen eines Ende mit der Anhängerkupplung versehen ist. Die DE 20 2009 015 075 U1 zeigt ihrerseits einen möglichen Einsatz auf, nämlich an einem PKW. Zusatzvorrichtungen für eine derartige Anhängerkupplung sind der DE 20 2009 006 846 U1 entnehmbar. Derartige Kugelkopf-Anhängerkupplungen sind mit den zu ziehenden Lastenanhängern etc. insbesondere in ihrer Höhe aufeinander abgestimmt und standardisiert. Bei höheren Fahrzeugen werden die Anhängerkupplungen derart angebracht, dass sie sich in der entsprechenden Höhe befindet.

Für Nutzfahrzeuge werden in der Regel ebenfalls Kugelkopf-Anhängerkupplungen eingesetzt. Hier besteht jedoch das Problem, dass es mehrere Anhängervarianten mit unterschiedlichen Deichselhöhen auch aufgrund verschiedener Fahrzeugausführungen der Nutzfahrzeuge gibt.

Aus dem Stand der Technik sind verschiedene, in ihrer Höhe verstellbare Anhängerkupplungen aus dem landwirtschaftlichen Bereich bekannt. So beschreibt die EP 0 155 338 A1 eine höhenverstellbare Anhängerkupplung für eben landwirtschaftliche Fahrzeuge, mit einem Kupplungsmaulträger, an dem ein Kupplungsmaul befestigt ist und in vertikalen Führungsschienen am Fahrzeug geführt ist. Um mit weniger Elementen auszukommen, ist eine Schwenkplatte zur Verstellung der Riegel zwischen deren Vierregelungsstellung und deren Entriegelungsstellung etwa in der Ebene der Riegel angeordnet.

Die EP 0 294 509 A1 offenbart eine höhenverstellbare Anhängerkupplung, ebenfalls für landwirtschaftliche Fahrzeuge, bei dem ein zu befestigender Anhängerblock in zwei parallelen Führungsschienen höhenverstellbar geführt ist. Nach dem Stand der Technik ist jeder Führungsschiene ein gesonderter Kraftantrieb in Form eines Hydraulikzylinders zugeordnet. Als Alternative wird daher der Einsatz von Spindelantrieben angesehen. Der Einsatz von nur einer Spindel wird ausgeschlossen, da dies die Benutzung einer Zapfwelle ausschließen würde.

Auch die EP 0 401 404 befasst sich mit einer höhenverstellbaren Anhängerkupplung, geführt in vertikalen Führungsschienen. Die EP 1 386 761 A1 rundet diese höhenverstellbaren Anhängerkupplungen ab.

Die mit der DE 60 2006 000 600 T2 (EP 1 683 659 B1) aufgezeigte Anhängerkupplung zeichnet sich dadurch aus, dass zwar auch hier zwei Führungswangen verwendet werden, die eine lösbar im unteren Endbereich der Führungswangen horizontal angeordnete Trägerplatte aufnehmen, jedoch sind auf der Trägerplatte zwei unterschiedliche Kupplungselemente vorgesehen, die durch die Trägerplatte in die aktive Kupplungsposition gebracht werden können.

All die vorgenannten Varianten sind konstruktiv sehr aufwändig. Zudem lassen sie sich nicht nachrüsten.

Aus der US 4,103,928 A ist eine verstellbare Anhängerkupplung bekannt, die über eine Spindel in ihrer Höhe verstellt werden kann. Die US 3,554,578 A zeigt eine Anhängerkupplung mit zwei parallel ausgerichteten Führungen und einer Spindel. Hierbei trägt die Spindel die Vertikalbelastung (Stützlast) des Anhängers. Diese Lösung ist für den Straßeneinsatz sicherlich ausreichend, jedoch nicht für Geländefahrten, bei den hohen und häufig dynamischen Stützlasten auftreten können. Auch ist die Höhe der Grundplatte bzw. der Spindel und der Führungen konstant. Wenn die Kupplungshöhe verstellt wird, ändert sich der Abstand zwischen dem Boden und der Unterkante der Grundplatte bzw. den Führungen nicht. Dadurch ergibt sich jedoch ein schlechter Übergangswinkel, egal ob mit oder ohne Anhänger gefahren wird.

Es ist die Aufgabe der Erfindung, eine Vorrichtung aufzuzeigen, die auf unterschiedliche Anhängervarianten in unterschiedlichen Deichselhöhen eingestellt werden kann.

Gelöst wird die Aufgabe durch die Merkmale des Patentanspruchs 1. Vorteilhafte Ausgestaltungen sind in den Unteransprüchen enthalten.

Der Erfindung liegt die Idee zugrunde, die Vorrichtung mit einer Anhängerkupplung für derartige Nutzfahrzeuge in ihrer Gesamtheit einfahren und für das Ausrichten auf die individuelle Deichselhöhe ausfahren zu können.

Dazu wird eine höhenverstellbare Vorrichtung mit Anhängerkupplung am Fahrzeug installiert, die sehr einfach aufgebaut ist. Sie besteht aus einer vorzugsweise vorderseitigen Kupplungsplatte. An der Kupplungsplatte ist eine Anhängerkupplung eingebunden, die ihrerseits durch das Höhenverstellen der Kupplungsplatte in der Höhe zum Boden verstellt werden kann. Dabei nimmt die Kupplungsplatte mit Anhängerkupplung eine eingefahrene und eine ausgefahrene Position - bezogen auf das Fahrzeuggrundgestell - ein. Die eingefahrene Position wird beispielsweise dann gewählt, wenn das Fahrzeug keinen Anhänger ziehen muss. Hier werden Anhängerkupplung und Kupplungsplatte derart zum Fahrzeugchassis verstellt, dass die Kupplungsplatte mit diesem unterseitig abschließt. Die ausgefahrene Position wird eingenommen, wenn das Fahrzeug einen Anhänger bewegen soll. Insbesondere in diesen Gebrauchspositionen kann dann die Anhängerkupplung individuell auf die entsprechende Deichselhöhe eingestellt werden.

Die Kupplungsplatte selbst wird in / über eine Führung bzw. beidseitigen Führungsrahmen gehalten / geführt. Das Verstellen der Kupplungsplatte gegenüber dem Fahrzeugchassis erfolgt mittels einer vorzugsweise hinterseitigen und bevorzugt mittig eingebundenen höhenverstellbaren Einrichtung, wie beispielweise einer Spindel bzw. einen Spindelantrieb. Die Spindel lässt auch bei einer beidseitigen Führung eine Schrägstellung zu, wozu sie kardanisch gelagert ist. Die Spindel kann in ihrer oberen Position vor Verschmutzung durch ein Rohr geschützt werden.

Vorgeschlagen wird eine einfache Konstruktion, die im Nichtgebrauch - kein Anhänger - eingefahren werden kann, der gesamte Mechanismus bzw. die gesamte Vorrichtung, sodass das Fahrzeug eine volle Geländefähigkeit erhält, der Mechanismus nicht an Unebenheiten, wie Hügel etc., hängen bleibt und möglicherweise abreißt. Die kardanische Lagerung lässt zudem eine Schrägstellung der Spindel zu. Es wird ein Klemmen der Spindel vermieden. Sie kann ohne größeren Aufwand bei bestehenden Fahrzeugen nachgerüstet werden. Des Weiteren besitzt diese Vorrichtung eine höhere Stützlast im Vergleich zu den derzeit angebauten Konstruktionen.

Anhand eines Ausführungsbeispiels mit Zeichnung soll die Erfindung näher erläutert werden. Es zeigt:
- Fig. 1: eine Ansicht von vorne und hinten auf die Vorrichtung mit eingefahrener Anhängerkupplung,
- Fig. 2: eine Ansicht von vom und hinten auf die Vorrichtung mit ausgefahrener Anhängerkupplung,

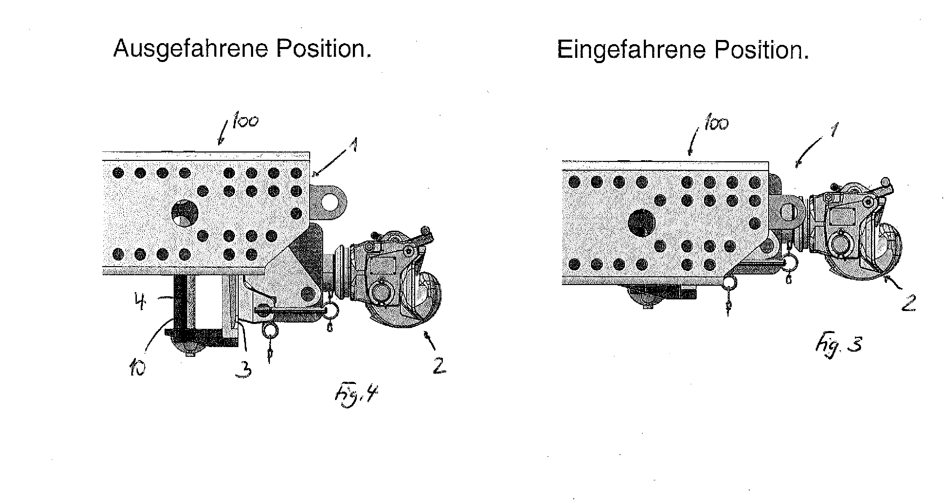

- Fig. 3: eine seitliche Darstellung der Vorrichtung mit eingefahrener Anhängerkupplung,
- Fig. 4: eine seitliche Darstellung der Vorrichtung mit ausgefahrener Anhängerkupplung.

Die Figuren zeigen in ihrer Gesamtheit eine Vorrichtung 1 für eine höhenverstellbare Anhängerkupplung 2.

Die Vorrichtung 1 ist derart ausgeführt, dass sie am bzw. in ein Chassis 100 eines Fahrzeuges eingebunden werden kann. Die Vorrichtung 1 ragt dabei selbst nicht unterhalb des Chassis 100 hinaus. Sie schließt mit der Unterkante des Chassis 100 bevorzugt ab. Die Vorrichtung 1 umfasst einen Führungsrahmen 6 bzw. wenigstens zwei Führungen 7, 8 zur Aufnahme, Halterung und Führung einer Kupplungsplatte 3, die ihrerseits parallel zum Chassis 100 ausgerichtet ist. An der Kupplungsplatte 3 ist die Anhängerkupplung 2 befestigt. Die Anhängerkupplung 2 weist vom Fahrzeug bzw. Fahrzeugchassis 100 weg.

Die Vorrichtung 1 verfügt zudem über eine, die Kupplungsplatte 3 in der Höhe verstellbaren Einrichtung 4. Diese Einrichtung 4 kann eine Spindel, ein Pneumatikzylinder etc. sein, die an / in einem hinter der Kupplungsplatte 3 eingebundenen Rahmen bzw. Gestell 5 der Vorrichtung 1 gelagert bzw. geführt ist. In der einfachsten Ausführung wird eine Spindel 4 verwendet, die mittig angeordnet ist. Als Verbindung aber auch um ein Verkanten zu vermeiden, sind zwei Streben bzw. Führungen 9, 10 für die Spindel 4 vorgesehen, die parallel zur Spindel 4 angeordnet sind und im Rahmen 5 gelagert bzw. geführt werden. Spindel 4 und Führungen 9, 10 sind dabei so ausgeführt und aufeinander abgestimmt, dass die Führungen 9, 10 eine Schrägstellung der Spindel 4 zulassen (kardanische Lagerung), um so ein Verbiegen und Klemmen der Spindel zu vermeiden, jedoch die Funktionsweise garantieren. Diese Maßnahme ist besonders dann vorzusehen, wenn beispielsweise höhere dynamische Lasten auftreten, die auf die Vorrichtung 1 bzw. Spindel 4 wirken.

Mit der höhenverstellbaren Einrichtung 4 kann die Kupplungsplatte 3 (vollständig) eingefahren als auch (vollständig) ausgefahren werden. Damit kann eine Einstellung verschiedener Höhen bzw. zur Anpassung der Anhängerkupplung 2 auf die unterschiedlichen Deichselhöhen diverser nicht näher dargestellten Lastenanhänger realisiert werden. Mit Einstellung der Kupplungshöhe verändert sich der Abstand der Kupplungsplatte 3 zum Boden. Die Vorrichtung 1 ist bevorzugt derart am Fahrzeugchassis 100 eingebunden, dass die Kupplungsplatte 3 mit der Unterkante des Chassis 100 vorzugsweise bündig abschließt, wenn diese vollständig eingefahren ist, den vollständig eingefahrenen Endzustand bzw. die vollständig eingefahrene Endposition eingenommen hat. Dadurch wird der Überhangswinkel durch die Kupplung nicht verringert.

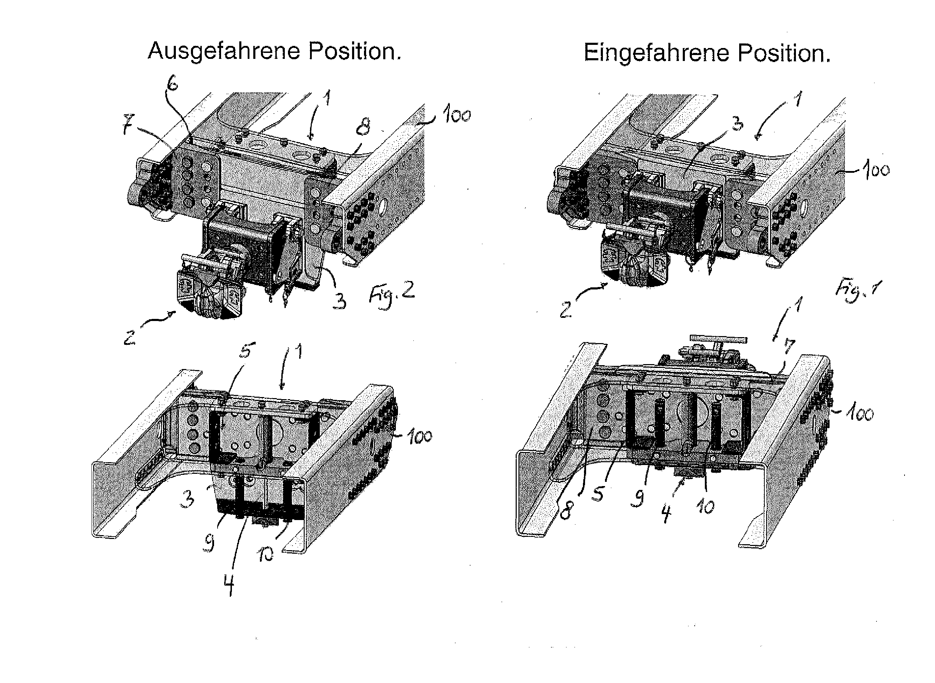

Die Fig. 1, 2 als auch 3 und 4 zeigen die durch die Spindel 4 einstellbaren Endzustände, hier den vollständig ausgefahren und den vollständig eingefahren Endzustand. Die Spindel 4 bzw. der Spindelantrieb ist so ausgestaltet, dass diese auch in Zwischenpositionen entsprechend der Deichselhöhe des Gegenlagers verharren und in diesen verrastet werden können.

## Patentansprüche

1. Vorrichtung (1) für eine höhenverstellbare Anhängerkupplung (2) für insbesondere Nutzfahrzeuge, **gekennzeichnet durch** die Merkmale:
● die Vorrichtung (1) ist derart am Chassis (100) des Fahrzeuges angebracht, dass sie selbst nicht unterhalb des Chassis (100) hinausragt,
● sie umfasst einen Führungsrahmen (6) oder wenigstens zwei Führungen (7, 8) zur Aufnahme, Halterung und Führung einer Kupplungsplatte (3), die ihrerseits parallel zum Chassis (100) des Fahrzeuges ausgerichtet ist,
● an der Kupplungsplatte (3) ist die Anhängerkupplung (2) befestigt,
● die Kupplungsplatte (3) ist in der Höhe innerhalb der Vorrichtung (1) verstellbar, wozu
● eine höhenverstellbare Einrichtung (4) eingebunden ist, mit der
● die Kupplungsplatte (3) vollständig eingefahren als auch vollständig ausgefahren werden kann bei Einstellung verschiedener Höhen der Anhängerkupplung (2) , wobei
● mit Einstellung der Kupplungshöhe sich der Abstand der Kupplungsplatte (3) mit Anhängerkupplung (2) zum Boden verändert, auf dem das Fahrzeug sich befindet.

2. Vorrichtung nach Anspruch 1, **dadurch gekennzeichnet, dass** die Kupplungsplatte (3) mit der Unterkante des Chassis (100) vorzugsweise bündig abschließt, wenn diese vollständig eingefahren ist.

3. Vorrichtung nach Anspruch 1 oder 2, **dadurch gekennzeichnet, dass** die Einrichtung (4) bevorzugt als Spindel ausgeführt ist.

4. Vorrichtung nach Anspruch 3, **dadurch gekennzeichnet, dass** zwei Streben bzw. Führungen (9, 10) für die Spindel (4) vorgesehen sind, die parallel zur Spindel (4) angeordnet sind und im Rahmen (5) gelagert bzw. geführt werden.

5. Vorrichtung nach Anspruch 4, **dadurch gekennzeichnet, dass** die Spindel (4) und Führungen (9, 10) so aufeinander abgestimmt sind, dass sie eine Schrägstellung der Spindel (4) zulassen.

6. Vorrichtung nach Anspruch 1 oder 2, **dadurch gekennzeichnet, dass** die Einrichtung (4) einen Pneumatikzylinder umfasst.
